# FASCICULE DE BREVET EUROPEEN

(11) **EP 3 096 983 B1**
(45) Date de publication et mention de la délivrance du brevet: **02.05.2018**
(21) Numéro de dépôt: 15702530.5
(22) Date de dépôt: 06.01.2015
(51) Int. Cl.: B60R 21/214, B60R 13/02

(54) **GARNITURE DE PAVILLON DE TOIT POUR DEPLOIEMENT DE COUSSIN GONFLABLE**
DECKENBESPANNUNG ZUR AUSLÖSUNG EINES AIRBAGS
ROOF HEADLINING FOR THE DEPLOYMENT OF AN AIR BAG

(30) Priorité: 22.01.2014 FR 1450539
(43) Date de publication de la demande: 30.11.2016
(73) Titulaire: PSA Automobiles SA, 78300 Poissy (FR)
(72) Inventeur: VILLA, Laurent, 91460 Marcoussis (FR); PARODY, Bruno, 78210 Saint-Cyr L'ecole (FR)
(86) Numéro de dépôt international: PCT/FR2015/050023
(87) Numéro de publication internationale: WO 2015/110734

(56) Documents cités:
- WO-A1-03/024751
- WO-A2-03/104033
- JP-A- H07 117 605
- US-A1- 2005 040 627

## Description

L'invention a trait au domaine des véhicules automobiles équipés d'un dispositif de coussin gonflable logé sur le toit. Plus particulièrement l'invention a trait à la réalisation d'un véhicule avec un dispositif de coussin gonflable disposé sur le toit, en haut du pare-brise et se déployant vers l'avant et vers le bas.

La réalisation d'un véhicule automobile avec un dispositif de coussin gonflable logé sur le toit est connue. Un tel dispositif est généralement réalisé pour la protection du conducteur et/ou du passager, il est précisément destiné à protéger au mieux une personne lors d'une collision du véhicule. Dans le cas d'une collision frontale, qui est celle généralement prioritaire pour laquelle le véhicule est ainsi réalisé, le torse et la tête de la personne sont les parties du corps qu'un coussin déployé est apte à protéger. Pour ce faire, une cartouche de gaz comprimé est libérée de manière à gonfler le coussin quasi instantanément et le déployer en avant de la personne. La forme du déploiement final d'un tel coussin est obtenue principalement par la géométrie qui lui est donnée, et il peut être optimisé selon l'habitacle et les équipements intérieurs. La dynamique d'ouverture du coussin gonflable et les effets qui y sont liés sont des critères importants de sa réalisation, il est recherché par exemple qu'une telle ouverture jusqu'au déploiement ne génère pas de risques supplémentaires de blessure pour le passager. Or il est aussi connu de loger le dispositif de manière à ce qu'il ne soit pas visible, par exemple derrière la garniture de toit, celle-ci étant généralement à proximité de la tête du conducteur. La garniture est un élément décoratif du toit, d'autres éléments fonctionnels peuvent aussi être réalisés sur le toit, par exemple des pare-soleils ou des dispositifs de commandes électriques. Il est donc recherché de réaliser le dispositif de coussin gonflable de toit tout en s'accommodant de tels éléments fonctionnels ou décoratifs de manière à éviter de générer des risques supplémentaires de blessure pour le passager.

Le document de brevet publié US 2005/0040627A1 divulgue un véhicule comprenant un dispositif de coussin gonflable logé sur le toit en haut du pare-brise et au-dessus d'une garniture de toit, un pare-soleil se trouvant en dessous de la garniture. Le dispositif de coussin gonflable comprend un boîtier vraisemblablement métallique et de section généralement en forme de U couché avec l'ouverture vers l'avant. La garniture ainsi que le pare-soleil sont montés sur le bord avant de la paroi inférieure du boîtier. La portion avant de la garniture est configurée pour plier vers le bas sous la pression du coussin lors de son déploiement. Cet enseignement est toutefois silencieux quant à la manière de favoriser ce mouvement. Il est intéressant en ce qu'il permet le déploiement du coussin gonflable vers l'avant en franchissant la barrière formée par la garniture. Il présente toutefois l'inconvénient que la paroi inférieure à la laquelle le pare-soleil est fixé est susceptible de plier vers le bas lors du déploiement du coussin et, partant, de déplacer le pare-soleil. Ceci est d'autant plus vrai que la portion avant de la garniture est rigide, notamment au niveau de la ligne de pivotement. Le déplacement du pare-soleil est susceptible de blesser le passager du véhicule assis à l'avant du véhicule. Le document JP H07 117605 A divulgue une garniture de pavillon de toit selon le préambule de la revendication 1. L'invention a pour objectif de faciliter la réalisation d'un dispositif de coussin gonflable de toit. Plus particulièrement l'invention a pour objectif de faciliter le déploiement vers l'avant et vers le bas d'un tel dispositif sans générer de risques supplémentaires de blessure pour le passager. Plus particulièrement encore, l'invention a pour objectif d'éviter un déplacement de la garniture et éventuellement du pare-soleil lors du déploiement d'un coussin gonflable situé au-dessus de la garniture en question.

L'invention est définit par les caractéristiques de la revendication 1. Selon un mode avantageux de l'invention, l'épaisseur réduite est réalisée par surcompression de la matière du panneau, sur sa face intérieure.
Selon un mode avantageux de l'invention, l'épaisseur réduite est inférieure à 70%, préférentiellement 60%, plus préférentiellement 50%, de l'épaisseur moyenne du panneau.

Selon un mode avantageux de l'invention, la ligne d'épaisseur réduite est à une distance de plus de 10mm, préférentiellement 20mm, plus préférentiellement 30mm, des orifices de fixation du panneau selon la direction longitudinale du véhicule.

Selon un mode avantageux de l'invention, la surépaisseur est formée par la surcompression formant l'épaisseur réduite.
Selon un mode avantageux de l'invention, le panneau comprend un ajour central avant, au niveau des orifices de fixation du panneau, la ligne d'épaisseur réduite s'étendant sur plus de 80%, préférentiellement plus de 90% de la portion de panneau latérale audit ajour. L'ajour central est destiné à recevoir un bloc d'éclairage intérieur situé à une partie avant et centrale du toit.
Le panneau peut être en matériau fibreux, présentant une épaisseur moyenne supérieure à 2mm, préférentiellement 3mm, plus préférentiellement 4mm. Il peut être semi-rigide.
L'invention a également pour objet un véhicule automobile comprenant un pare-brise, un toit, une garniture de toit et un dispositif de coussin gonflable disposé entre la garniture et le toit en haut du pare-brise, le dispositif de coussin gonflable étant configuré pour se déployer essentiellement vers l'avant et vers le bas, devant le conducteur ou le passager avant du véhicule, remarquable en ce que la garniture de toit est conforme à l'invention.
Avantageusement, la ligne d'épaisseur réduite est située à un niveau entre la face avant d'ouverture du dispositif de coussin gonflable et les orifices de fixation du panneau.
Avantageusement, la ligne d'épaisseur réduite est à distance de la face avant de plus de 50% de la distance entre les orifices et la face, plus préférentiellement de plus de 60% de la dite distance.

Selon un mode avantageux de l'invention, la garniture de toit est fixée via ses orifices de fixation, notamment de pare-soleil, à des pattes de toit de part et d'autre du dispositif de coussin gonflable.

Avantageusement, la garniture de toit est fixée aux pattes de toit par des moyens de fixation n'ayant pas d'autre fonctionnalité que ladite fixation, lesdits moyens se logeant au travers des orifices de fixation de la garniture.

Avantageusement, les orifices de fixation sont situés longitudinalement derrière la face avant du dispositif de coussin gonflable, préférentiellement à une distance de plus de 20%, plus préférentiellement plus de 30%, encore plus préférentiellement plus de 40%, de la longueur du dispositif.

Selon un mode avantageux de l'invention, les pattes de toit s'étendent essentiellement longitudinalement, le dispositif de coussin gonflable étant préférentiellement fixé auxdites pattes.

Selon un mode avantageux de l'invention, le véhicule automobile comprend au moins un pare-soleil, les fixations dudit ou des pare(s)-soleil se logeant au travers des orifices de fixation du panneau, les volets du ou des pare(s)-soleil en position de repos ou de travail se trouvant en arrière de la ligne d'épaisseur réduite et d'une portion de garniture déplacée par le déploiement du coussin gonflable.

Les mesures de l'invention sont intéressantes en ce qu'elles permettent au dispositif de coussin gonflable de s'ouvrir vers l'avant en franchissant la garniture, celle-ci s'ouvrant en avant de la personne à protéger sans générer de risques supplémentaires de blessure pour la personne. En effet, l'effacement de la garniture pour octroyer le passage du coussin gonflable est facilité par une ligne d'épaisseur réduite du panneau de manière à former une charnière, l'épaisseur réduite étant prononcée et étendue dans le panneau. La garniture fixée à même le toit en retrait de la ligne charnière ne se voit pas déplacée lors du déploiement.

D'autres caractéristiques et avantages de la présente invention seront mieux compris à l'aide de la description et des dessins parmi lesquels :
- La figure 1 est une illustration de la partie avant droite de l'habitacle d'un véhicule automobile en situation de collision avant, le véhicule étant conforme à l'invention, un passager étant en position contre un coussin gonflable en position déployée ;
- La figure 2 est une vue en coupe d'une portion du toit du véhicule de la figure 1 ;
- La figure 3 est une vue de dessus d'une partie latérale avant de la garniture de toit de la figure 2 ;
- La figure 4 est une vue en coupe de la garniture de toit des figures 2 et 3, au niveau de la zone d'épaisseur réduite ;

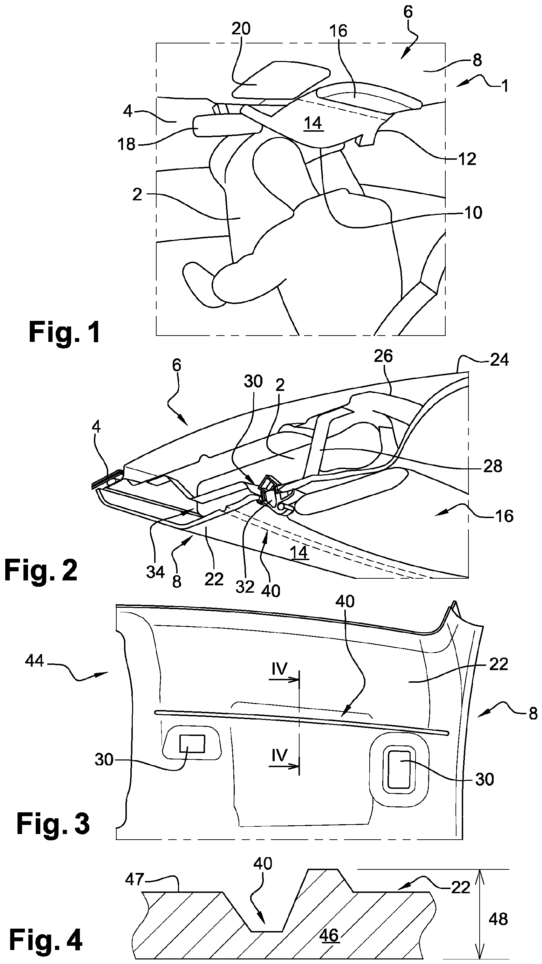

La figure 1 illustre une mise en situation dans un habitacle 1 d'une collision frontale d'un véhicule automobile, un passager avant étant en position contre un coussin gonflable 2 déployé. On voit aussi un pare-brise 4, un toit 6, une garniture de pavillon de toit 8, le coussin gonflable 2 parti du toit 6 est essentiellement déployé vers l'avant et vers le bas, devant le passager de manière à le protéger. Pour arriver dans cette position, le coussin gonflable 2, libéré par de l'air, a forcé une ouverture de la garniture de pavillon de toit 8. On peut observer sur l'image le bord avant 10 ainsi que les bords latéraux 12 de la portion de garniture 14 dont l'ouverture a ainsi été forcée. En l'occurrence le véhicule comprend des équipements fonctionnels, par exemple, un pare-soleil 16 logé en arrière de la portion de garniture 14 ; un rétroviseur 18 monté sur le pare-brise à gauche du passager et à gauche de la portion de garniture 14 ; un bloc d'éclairage intérieur et/ou de commande 20, ces équipements ne se voyant pas endommagés ou déplacés vers le passager lors du déploiement du coussin gonflable 2. La situation illustrée ci-avant pour le passager du véhicule peut aussi être celle du conducteur du véhicule, les éléments présentés plus haut se trouvant à l'avant droit de l'habitacle 1 devenant référencés à l'avant gauche de l'habitacle.

La figure 2 est une vue en coupe du toit 6 du véhicule de la figure 1 et conforme à l'invention. A la différence de la figure 1, le dispositif de coussin gonflable 2 est représenté à l'état non déployé sous forme de module, il est logé en haut du pare-brise 4, en dessous du toit 6, et au-dessus du panneau 22 de la garniture de pavillon 8. On voit plus précisément le toit 6 composé de la couverture de toit 24, d'une traverse avant de toit 26 et de pattes de fixation 28. Les pattes 28 sont réalisées de part et d'autre du dispositif de coussin gonflable 2 et permettent la fixation du panneau 22 de garniture de pavillon de toit 8 via des orifices 30. Plus précisément la fixation peut être réalisée par des moyens de fixation 32 du pare-soleil 16, ceux-ci étant montés sur les pattes de fixation 28 et fixant dans le même montage le panneau 22 de garniture 8. La fixation peut aussi être réalisée par des moyens de fixation 32 ayant pour unique fonction ladite fixation du panneau 22. Les orifices de fixation 30, notamment du pare-soleil 16, sont situés longitudinalement derrière la face avant 34 du dispositif de coussin gonflable 2, préférentiellement à plus de 20%, plus préférentiellement plus de 30%, encore plus préférentiellement plus de 40%, de la longueur du dispositif 2. Les pattes de fixation 28 s'étendent longitudinalement au véhicule et peuvent être le lieu de fixation du dispositif de coussin gonflable 2.

Le panneau 22 comprend en avant des deux orifices de fixation 30 une zone d'épaisseur réduite 40 du panneau de garniture 22. La zone 40 forme une ligne s'étendant transversalement au véhicule de manière à former une charnière permettant le déploiement vers le pare-brise 4 du coussin gonflable 2. Plus précisément, le coussin gonflable 2 exerce au cours de son déploiement un effort sur la portion 14 du panneau 22 de la garniture, vue plus haut en relation avec la figure 2, cette portion 14 s'ouvrant par l'effort en pivotant le long de la ligne d'épaisseur réduite 40. Le panneau peut présenter une surépaisseur (non représentée) s'étendant le long et à l'arrière de la ligne d'épaisseur réduite 40, ladite surépaisseur pouvant être supérieure à 20% de l'épaisseur moyenne du panneau. Cette surépaisseur présente l'avantage de rigidifier le panneau. La ligne 40 est située à un niveau entre la face avant 34 du dispositif de coussin gonflable et les orifices 30 de fixation du pare-soleil. La ligne 40 est à distance de la face avant 34 du module de coussin gonflable de plus de 50% de la distance entre les orifices 30 et la face 34, plus préférentiellement de plus de 60% de ladite distance.

La figure 3 est une vue de dessus d'un côté avant du panneau 22 de la garniture de pavillon de toit 8 conforme à l'invention. On peut voir les deux orifices 30 de fixation du panneau 22, la ligne 40 de la zone d'épaisseur réduite situé en avant (en haut sur l'image) des deux orifices 30. La ligne d'épaisseur réduite 40 est à une distance de plus de 10mm des orifices de fixation 30 selon la direction longitudinale du véhicule, elle peut être à une distance de plus de 20mm, elle peut être aussi à une distance de plus de 30mm des orifices 30. On peut voir sur la gauche de l'image un ajour central avant 44, au niveau des orifices de fixation 30, la ligne d'épaisseur réduite 40 s'étendant sur plus de 80%, préférentiellement plus de 90% de la portion de panneau 22 latérale audit ajour 44. Les formes générales du panneau 22 sont destinées à épouser la face intérieure du toit, le panneau 22 peut être en matériau fibreux, présentant une épaisseur moyenne supérieure à 2mm, préférentiellement 3mm, plus préférentiellement 4mm. Il peut être semi-rigide. Il peut être formé par thermoformage.

La figure 4 est une vue en coupe du panneau de la garniture de toit 22 au niveau de la zone d'épaisseur réduite 40. L'épaisseur réduite 46 est réalisée par surcompression de la matière du panneau 22, sur sa face intérieure 47 (au-dessus sur l'image). L'épaisseur réduite 46 peut être inférieure à 70%, préférentiellement 60%, plus préférentiellement 50%, de l'épaisseur moyenne du panneau 22. On peut voir la surépaisseur 48 s'étendant le long et à l'arrière de la ligne d'épaisseur réduite 40 (à droite de la ligne d'épaisseur réduite sur l'image), elle peut être supérieure à 20% de l'épaisseur moyenne du panneau. La surépaisseur 48 peut être formée par la surcompression formant l'épaisseur réduite.

## Revendications

1. Garniture de pavillon de toit (8) de véhicule automobile, comprenant un panneau (22) destiné à épouser la face intérieure du toit (6), ledit panneau (22) comprenant, sur au moins un côté par rapport à la direction longitudinale du véhicule, au moins deux orifices de fixation (30) du panneau (22), et préférentiellement d'un pare-soleil (16) ; ledit panneau (22) comprenant une zone d'épaisseur réduite, ladite zone formant une ligne (40) s'étendant transversalement à l'avant des orifices de fixation (30), de manière à former une charnière permettant le déploiement vers le pare-brise (4) d'un coussin gonflable (2) logé entre la garniture (8) et le toit (6), **caractérisée en ce que** le panneau (22) présente une surépaisseur (48) s'étendant le long et à l'arrière de la ligne d'épaisseur réduite (40), ladite surépaisseur (48) étant supérieure à 20% de l'épaisseur moyenne du panneau (22).

2. Garniture (8) selon la revendication 1, **caractérisée en ce que** l'épaisseur réduite (46) est réalisée par surcompression de la matière du panneau (22), sur sa face intérieure (47).

3. Garniture (8) selon l'une des revendications 1 et 2, **caractérisée en ce que** l'épaisseur réduite (46) est inférieure à 70%, préférentiellement 60%, plus préférentiellement 50%, de l'épaisseur moyenne du panneau (22).

4. Garniture (8) selon l'une des revendications 1 à 3, **caractérisée en ce que** la ligne d'épaisseur réduite (40) est à une distance de plus de 10mm, préférentiellement 20mm, plus préférentiellement 30mm, des orifices de fixation (30) du panneau (22) selon la direction longitudinale du véhicule.

5. Garniture (8) selon les revendications 1 et 4, **caractérisée en ce que** la surépaisseur (48) est formée par la surcompression formant l'épaisseur réduite.

6. Garniture (8) selon l'une des revendications 1 à 5, **caractérisée en ce que** le panneau (22) comprend un ajour central avant (44), au niveau des orifices de fixation (30) dudit panneau (22), la ligne d'épaisseur réduite (40) s'étendant sur plus de 80%, préférentiellement plus de 90% de la portion de panneau (22) latérale audit ajour.

7. Véhicule automobile comprenant un pare-brise (4), un toit (6), une garniture de toit (8) et un dispositif de coussin gonflable (2) disposé entre la garniture (8) et le toit (6) en haut du pare-brise (4), le dispositif de coussin gonflable (2) étant configuré pour se déployer essentiellement vers l'avant et vers le bas, devant le conducteur ou le passager avant du véhicule, **caractérisé en ce que** la garniture de toit (8) est conforme à l'une des revendications 1 à 6.

8. Véhicule selon la revendication 7, **caractérisé en ce que** la garniture de toit (8) est fixée via ses orifices de fixation (30) à des pattes de toit (28) de part et d'autre du dispositif de coussin gonflable (2).

9. Véhicule selon l'une des revendications 7 et 8, **caractérisé en ce que** les pattes de toit (28) s'étendent essentiellement longitudinalement, le dispositif de coussin gonflable (2) étant préférentiellement fixé auxdites pattes (28).

## Patentansprüche

1. Kraftfahrzeug-Deckenbespannung (8), die eine Platte (22) umfasst, die dazu bestimmt ist, sich an die Innenfläche des Dachs (6) zu legen, wobei die Platte (22) auf mindestens einer Seite in Bezug auf die Längsrichtung des Fahrzeugs mindestens zwei Befestigungsöffnungen (30) der Platte (22) umfasst, und bevorzugt eine Sonnenblende (16); wobei die Platte (22) eine Zone mit verringerter Stärke umfasst, wobei die Zone eine Linie (40) bildet, die sich quer an der Vorderseite der Befestigungsöffnungen (30) derart erstreckt, dass ein Scharnier gebildet wird, das das Aufblähen zu der Windschutzscheibe (4) eines Airbags (2), der zwischen der Bespannung (8) und dem Dach (6) untergebracht ist, erlaubt, **dadurch gekennzeichnet, dass** die Platte (22) eine Überdicke (48) aufweist, die sich entlang und an der Rückseite der Linie mit verringerter Stärke (40) erstreckt, wobei die Überstärke (48) größer ist als 20 % der mittleren Stärke der Platte (22).

2. Deckenbespannung (8) nach Anspruch 1, **dadurch gekennzeichnet, dass** die verringerte Stärke (46) durch Überkomprimieren des Materials der Platte (22) auf seiner Innenseite (47) hergestellt ist.

3. Deckenbespannung (8) nach einem der Ansprüche 1 und 2, **dadurch gekennzeichnet, dass** die verringerte Stärke (46) kleiner ist als 70 %, bevorzugt 60 %, bevorzugter 50 % als die mittlere Stärke der Platte (22).

4. Deckenbespannung (8) nach einem der Ansprüche 1 bis 3, **dadurch gekennzeichnet, dass** die Linie mit verringerter Stärke (40) in einer Entfernung von mehr als 10 mm, bevorzugt 20 mm, bevorzugter 30 mm von den Befestigungsöffnungen (30) der Platte (22) entlang der Längsrichtung des Fahrzeugs liegt.

5. Deckenbespannung (8) nach den Ansprüchen 1 und 4, **dadurch gekennzeichnet, dass** die Überstärke (48) durch das Überkomprimieren, das die verringerte Stärke bildet, gebildet wird.

6. Deckenbespannung (8) nach einem der Ansprüche 1 bis 5, **dadurch gekennzeichnet, dass** die Platte (22) einen vorderen zentralen Durchbruc h (44) im Bereich der Befestigungsöffnungen (30) der Platte (22) umfasst, wobei sich die Linie mit verringerter Stärke (40) auf mehr als 80 %, bevorzugt mehr als 90 % des seitlichen Abschnitts der Platte (22) zum Durchbruch erstreckt.

7. Kraftfahrzeug, das eine Windschutzscheibe (4), ein Dach (6), eine Deckenbespannung (8) und einen Airbag (2) umfasst, der zwischen der Deckenbespannung (8) und dem Dach (6) oberhalb der Windschutzscheibe (4) angeordnet ist, wobei der Airbag (2) konfiguriert ist, um sich im Wesentlichen nach vorn und nach unten vor dem Fahrer oder dem vorderen Beifahrer des Fahrzeugs aufzublähen, **dadurch gekennzeichnet, dass** die Dachbespannung (8) einem der Ansprüche 1 bis 6 entspricht.

8. Fahrzeug nach Anspruch 7, **dadurch gekennzeichnet, dass** die Dachbespannung (8) über ihre Befestigungsöffnungen (30) an Dachpratzen (28) auf jeder Seite des Airbags (2) befestigt ist.

9. Fahrzeug nach einem der Ansprüche 7 und 8, **dadurch gekennzeichnet, dass** sich die Dachpratzen (28) im Wesentlichen längs erstrecken, wobei der Airbag (2) bevorzugt an den Pratzen (28) befestigt ist.

## Claims

1. A roof headlining (8) of a motor vehicle, including a panel (22) intended to conform to the inner face of the roof (6), said panel (22) including, on at least one side in relation to the longitudinal direction of the vehicle, at least two openings (30) for fastening the panel (22), and preferably for fastening a sun visor (16); said panel (22) including a zone of reduced thickness, said zone forming a line (40) extending transversely to the front of the fastening openings (30), so as to form a hinge allowing the deployment towards the windscreen (4) of an airbag (2) housed between the lining (8) and the roof (6), **characterized in that** the panel (22) has an extra thickness (48) extending along and to the rear of the line of reduced thickness (40), said excess thickness (48) being greater than 20% of the average thickness of the panel (22).

2. The lining (8) according to Claim 1, **characterized in that** the reduced thickness (46) is realized by over-compression of the material of the panel (22) on its interior face (47).

3. The lining (8) according to one of Claims 1 and 2, **characterized in that** the reduced thickness (46) is less than 70%, preferably 60%, more preferably 50% of the average thickness of the panel (22).

4. The lining (8) according to one of Claims 1 to 3, **characterized in that** the line of reduced thickness (40) is at a distance of more than 10mm, preferably 20mm, more preferably 30mm, from the attachment openings (30) of the panel (22) along the longitudinal direction of the vehicle.

5. The lining (8) according to Claims 1 and 4, **characterized in that** the excess thickness (48) is formed by the over-compression forming the reduced thickness.

6. The lining (8) according to one of Claims 1 to 5, **characterized in that** the panel (22) includes a central front cutout (44), at the level of the attachment openings (30) of said panel (22), the line of reduced thickness (40) extending over more than 80%, preferably more than 90%, of the portion of the panel (22) lateral to said cutout.

7. A motor vehicle including a windscreen (4), a roof (6), a roof headlining (8) and an airbag device (2) disposed between the lining (8) and the roof (6) at the top of the windscreen (4), the airbag device (2) being configured to deploy essentially forward and downward, in front of the driver or the front passenger of the vehicle, **characterized in that** the roof headlining (8) is according to one of Claims 1 to 6.

8. The motor vehicle according to Claim 7, **characterized in that** the roof headlining (8) is attached via its attachment openings (30) to roof lugs (28) on either side of the airbag device (2).

9. The vehicle according to one of Claims 7 and 8, **characterized in that** the roof lugs (28) extend essentially longitudinally, the airbag device (2) being preferably attached to said lugs (28).
